# EUROPÄISCHE PATENTSCHRIFT

(11) **EP 3 977 432 B1**
(45) Veröffentlichungstag und Bekanntmachung des Hinweises auf die Patenterteilung: **26.07.2023**
(21) Anmeldenummer: 20739235.8
(22) Anmeldetag: 27.05.2020
(51) Int. Cl.: B65G 1/137, G08C 17/02

(54) **KOMMISSIONIERSYSTEM**
PICKING SYSTEM
SYSTÈME DE PRÉPARATION DE COMMANDES

(30) Priorität: 28.05.2019 AT 504842019
(43) Veröffentlichungstag der Anmeldung: 06.04.2022
(73) Patentinhaber: TGW Logistics Group GmbH, 4614 Marchtrenk (AT)
(72) Erfinder: HIMMELBAUER, Hannes, 4631 Krenglbach (AT)
(74) Vertreter: Burger, Hannes
(86) Internationale Anmeldenummer: PCT/AT2020/060212
(87) Internationale Veröffentlichungsnummer: WO 2020/237272

(56) Entgegenhaltungen:
- WO-A1-2018/146687
- JP-A- H04 251 010
- US-A1- 2011 118 903
- KHANCHUEA KANITKORN ET AL: "A Multi-Protocol IoT Gateway and WiFi/BLE Sensor Nodes for Smart Home and Building Automation: Design and Implementation", 2019 10TH INTERNATIONAL CONFERENCE OF INFORMATION AND COMMUNICATION TECHNOLOGY FOR EMBEDDED SYSTEMS (IC-ICTES), IEEE, 25. März 2019 (2019-03-25), Seiten 1-6, XP033541325, DOI: 10.1109/ICTEMSYS.2019.8695968 [gefunden am 2019-04-22]

## Beschreibung

Die Erfindung betrifft ein Kommissioniersystem.

Bei der Kommissionierung wird von einem Bediener an einer Arbeitsstation Ware gemäß einem Kommissionierauftrag von einem an der Arbeitsstation bereitgestellten Quell-Ladungsträger in einen Ziel-Ladungsträger umgelagert. Wenn dieser Vorgang abgeschlossen ist, muss der Bediener den Abschluss der Arbeitsstation bzw. dem übergeordneten Lager-Verwaltungssystem (Warehouse Management System - WMS) bekannt geben, um den nächsten Arbeitsschritt auszulösen.

Dazu ist es bekannt, an der Arbeitsstation ein Bestätigungs-Steuerelement anzuordnen, welches vom Bediener nach Abschluss eines Arbeitsschritts betätigt werden muss. Am Arbeitsplatz werden dann beispielweise beide Ladungsträger abtransportiert und neue Ladungsträger für den nächsten Kommissionierauftrag bereitgestellt. Oder es wird nur einer der beiden Ladungsträger getauscht, da der andere Ladungsträger im folgenden Kommissionierauftrag noch benötigt wird.

Jedenfalls muss dieser Austausch/Wechsel durch eine manuelle Bestätigungshandlung des Bedieners ausgelöst werden. Zumeist sind die Ladungsträger so um den Bediener angeordnet, dass ein möglichst ergonomischer Arbeitsablauf erreicht wird, der Bediener also möglichst kurze Bewegungen machen muss, um den Kommissioniervorgang durchzuführen. Daher ist auch das Bestätigungs-Steuerelement an einer griffgünstigen Position, zumeist mittig zwischen den Ladungsträgern angeordnet.

Doch auch bei einer bestmöglich griffgünstigen Anordnung bleibt das Problem bestehend, dass der Bewegungsablauf des Bedieners durch die Betätigungshandlung gestört wird. Das Umlagern der Ware erfolgt vereinfacht nahezu entlang einer kreisförmigen Bahn vom Quell- zum Zielbehälter. Das Bestätigungs-Steuerelement kann sich daher nicht auf dieser Bahn befinden, da es sich sonst im Bewegungsablauf befinden würde - es ist daher meist zurückversetzt an einem Gehäuseteil des Arbeitsplatzes angeordnet. Der Bediener muss sich also zumeist mit dem Oberkörper nach vor bewegen, um das Steuerelement erreichen zu können. Aus arbeitsphysiologischen Überlegungen ist dies von Nachteil. Ferner benötigt jeder dieser Aktionen zusätzlich Zeit.

Zur Verbesserung der ergonomischen Situation ist beispielweise aus der US 2018/141751 A1 ein drahtlos angebundener Handsender bekannt, über den ein Not-Stopp eines Regalbediengeräts ausgelöst werden kann.

Ein ähnlicher Handsender, um ein Förderband im Notfall anhalten zu können, ist aus der US 2018/039245 A1 bekannt.

Der Nachteil dieser Systeme besteht darin, dass die vorgeschlagenen Sendeeinheiten für einen Notfall ausgelegt sind, welcher im üblichen Betriebsfall sehr selten auftreten wird - im Idealfall niemals. Im Gegensatz dazu, wird das Bestätigungs-Steuerelement sehr häufig betätigt, sodass eine völlig andere, und insbesondere herausfordernde Situation hinsichtlich der elektrischen Energieversorgung besteht.

Ein weiterer Stand der Technik ist beispielweise aus der WO 2018/146687 A1 eine Robotersteuerung bekannt, bei der gemäß einer Ausführung, das Eingabe- bzw. Steuerungselement als Handschuh ausgebildet ist.

Ein weiterer Nachteil bekannter Systeme besteht darin, dass keine feste Zuordnung zwischen mobiler Sendeeinheit und zu steuerndem Gerät gegeben ist. Da in einem Kommissioniersystem meist mehrere Arbeitsstationen nahe beieinander angeordnet sind, ist es von Bedeutung, dass eine mobile Sendeeinheit nur eine spezifische - die zugeordnete - Arbeitsstation bedienen kann. Es muss sicher verunmöglicht sein, dass ein Bediener an einer anderen Arbeitsstation als der eigenen, die Bestätigung eines durchgeführten Kommissioniervorgangs auslöst.

In der JP 2018-115055 A ist eine (mobile) Kommissionierstation zur Durchführung von Kommissionieraufträgen durch eine Kommissionierperson in einem Warenlager offenbart. Vorgesehen ist eine Bestätigungsvorrichtung, welche aus einer Mobileinheit und zumindest zwei zugeordneten "Zugangspunkten" ("access points") besteht, die drahtlos miteinander über ein WLAN-Netz kommunizieren. Die Zugangspunkte stehen des Weiteren mit einem übergeordneten Waren-Management-Rechner in Verbindung. Die Mobileinheit kann sowohl fix an der Kommissionierstation angebracht als auch flexibel von der Kommissionierperson getragen werden. Ist die Abarbeitung des Kommissionierauftrags beendet, wird dies an der Mobileinheit bestätigt und ein Bestätigungssignal an die Zugangspunkte übertragen. Ferner können von einem Server Nachrichten an die Mobileinheit übertragen werden, welche Pickinformationen umfassen, sodass eine permanente Kommunikationsverbindung bestehen muss, damit die Mobileinheit jederzeit eingehende Nachrichten empfangen kann.

Die JP 4-251010 A offenbart eine Fernbedienungseinrichtung, welche bei Beendigung eines Kommissioniervorgangs ein Bestätigungssignal an einen übergeordneten Warenlager-Steuerrechner versenden kann.

Die DE 10 2015 211 761 A1 offenbart ein Überwachungssystem für einen Kommissionierarbeitsplatz, welches ein Kamerasystem aufweist. Das Kamerasystem ist dazu ausgebildet, Aktivitäten einer Kommissionierperson zu erfassen, auszuwerten und daraus Steuerungsinformationen abzuleiten.

Die EP 2 607 271 A1 offenbart ein Verfahren zum Kommissionieren, wobei die Bestätigung der Durchführung des Kommissionierauftrags mittels eines elektro-mechanischen oder softwaretechnisch ausgeführten Eingabemittels erfolgt.

Die DE 201 10 457 U1 offenbart eine Kommissionieranzeigevorrichtung zur Anzeige eines abzuarbeitenden Kommissioniervorgangs, welche ein Mikrofon aufweist, um die Abarbeitung eines Kommissioniervorgangs akustisch bestätigen zu können. Ferner ist ein Tastenfeld vorgesehen, wobei durch Berühren die Abarbeitung des Kommissioniervorgangs bestätigt werden kann. Zur Übertragung und anschließender Auswertung der Sprachkommandos können die Kommissionieranzeigevorrichtung und ein Kommissioniersteuerrechner über eine Funkverbindung miteinander verbunden sein.

Die DE 10 2006 057 266 A1 offenbart ein Lichtgitter oder eine Bestätigungseinheit, mit letzterer ein erfolgter Kommissioniervorgang ermittelt und angezeigt werden kann.

Die die JP 2-74889 A offenbart einen Kommissioniervorgang, bei dem durch eine Kommissionierperson über an einem Handschuh angeordnete Eingabetasten Eingabebefehle abgegeben und an ein übergeordnetes Steuersystem übermittelt werden können.

Die Aufgabe der Erfindung besteht nun darin, ein Kommissioniersystem mit einem Arbeitsplatz mit einem Fernbedienungselement auszustatten, welches Fernbedienungselement über eine Kommunikationsverbindung dem fest zugeordneten Arbeitsplatz Nachrichten senden kann und welches einen Energieverbrauch aufweist, der einen Langzeitbetrieb von mehreren Tagen ermöglicht.

Die Aufgabe der Erfindung wird durch ein Kommissioniersystem nach Anspruch 1 gelöst.

An einer Arbeitsstation werden gemäß einem Auftrag Wareneinheiten von einem Quell-Ladungsträger auf einen Ziel-Ladungsträger umgeladen. Der Auftrag ist dabei durch einen Kommissionierauftrag (picking order), Umladeauftrag (decanting order) und dgl. gebildet. Die Quell-Ladungsträger und/oder Ziel-Ladungsträger sind beispielweise Behälter, Kartons, Paletten, Hängetaschen, und dgl. An der Arbeitsstation sind ein Quell- und ein Ziel-Ladungsträger eines Auftrags bereitgestellt, wobei vom Bediener gemäß einem Auftrag, eine Umlagerung zumindest einer Wareneinheit aus dem Quell-Ladungsträger in den Ziel-Ladungsträger erfolgt.

Die Arbeitsstation weist eine Ablaufsteuerung und ein damit verbundenes Bestätigungs-Steuerelements auf, wobei die Ablaufsteuerung dazu ausgebildet ist, nach Betätigung des Bestätigungs-Steuerelements durch den Bediener einen dem aktuellen Kommissionierauftrag folgenden Schritt auszulösen. Dazu ist vorgesehen, dass das Bestätigungs-Steuerungselement eine Basisstation und eine Mobileinheit aufweist, zwischen denen eine gekoppelte drahtlose Daten-Kommunikationsverbindung besteht. Die Basisstation weist eine Empfangs- und Auswerteeinheit auf, welche stets zum Empfang von Datentelegrammen der Mobileinheit ausgebildet ist und welche ferner einen Schaltausgang aufweist, der mit einem Steuerungseingang der Ablaufsteuerung verbunden ist.

Ferner ist vorgesehen, dass die Mobileinheit ein Betätigungselement mit einem elektrischen Kontaktgeber, einen elektrischen Energiespeicher und einen Microcontroller mit einer Kommunikationsschnittstelle aufweist. Der Microcontroller ist dazu ausgebildet, bei Betätigung des Betätigungselements und damit der Betätigung des Kontaktgebers, ein Datentelegramm über die Kommunikationsschnittstelle abzusenden. Ferner besteht die Daten-Kommunikationsverbindung nur während einer Betätigung des Betätigungselements und der Übermittlung des Datentelegramms.

Durch Vorsehen einer Mobileinheit mit den gegenständlichen Merkmalen wird dem Bediener die Möglichkeit gegeben, diese wahlfrei dort zu positionieren, wo sie für den Bediener am besten erreichbar ist, also den geringstmöglichen zusätzlichen Weg erfordert. Durch die gekoppelte Daten-Kommunikationsverbindung ist ferner gewährleistet, dass ein Bediener nur Bestätigungsaktionen an der eigenen, zugeordneten Arbeitsstation auslösen kann. Da einerseits die Verbindung gekoppelt ist und dass ferner eine Datenverbindung besteht, ist klar festgelegt, dass nur die einander zugeordneten Komponenten miteinander Kommandos austauschen können, insbesondere Kommandos empfangen und annehmen können. Eine irrtümliche Fehlauslösung an einer benachbarten Arbeitsstation ist somit grundsätzlich nicht möglich.

Da an der Arbeitsstation hinsichtlich der Energieverfügbarkeit keine Einschränkungen bestehen, ist vorgesehen, dass die Basisstation ständig empfangsbereit ist, sodass ein eingehendes Datentelegramm unmittelbar ausgewertet und ein Schaltausgang aktiviert werden kann.

Hinsichtlich der Aufrechterhaltung der Datenverbindung ist vorgesehen, dass diese nur während einer Betätigung des Betätigungselements und Übermittlung des Datentelegramms besteht. Dies bedeutet insbesondere aber auch, dass die Daten-Kommunikationsverbindung nach dem erfolgten Versand des Datentelegramms bereits wieder inaktiv ist, selbst wenn das Betätigungselement noch betätigt ist. Das bedeutet aber auch, dass die Daten-Kommunikationsverbindung bis zum erfolgten Versand des Datentelegramms aufrecht bleibt, auch wenn Betätigungselement nicht mehr betätigt ist. Aufgrund der Verarbeitungsgeschwindigkeit des Microcontrollers und der Übertragungsgeschwindigkeit der Kommunikationsverbindung ist dieser Fall aber eher unwahrscheinlich.

Im Stand der Technik ist eine Daten-Kommunikationsverbindung überwiegend aktiv, und tauschen regelmäßig zumindest Statusinformation aus, was zu einem hohen Energieverbrauch führt und einem Langzeitbetrieb entgegensteht. Grundsätzlich wäre es denkbar, den Energiespeicher auch zu vergrößern.

Nach einer Weiterbildung ist vorgesehen, dass die Daten-Kommunikationsverbindung durch eine paketbasierte Funk-Datenverbindung gebildet ist, insbesondere durch WLAN, und bevorzugt durch eine gepaarte Funk-Datenverbindung. Diese Weiterbildung hat den Vorteil, dass somit bestehende, standardisierte Kommunikationsmittel verwendet werden können. Insbesondere hat eine paketbasierte Datenverbindung eine Adressierung implementiert, sodass eine Prüfung bzw. Sicherstellung einer Kopplung vereinfacht wird. Gemäß einer bevorzugten Ausbildung wird als gepaarte Funk-Datenverbindung ESP-NOW von Espressif verwendet, welches nach einer initialen Paarung der Kommunikationspartner, eine Kommunikation ohne erforderliches Handshake ermöglicht. Dadurch wird ein sehr rascher Verbindungsaufbau erreicht und die aktive Sendedauer reduziert, was vorteilhaft für einen Langzeitbetrieb ist.

Eine Weiterbildung besteht auch darin, dass in einem Speichermittel des Microcontrollers Zugangsdaten der Basisstation hinterlegt sind, insbesondere eine Netzwerkkennung. Der besondere Vorteil dieser Weiterbildung besteht darin, dass dadurch ein Aufbau der Kommunikationsverbindung aus einem Ruhezustand der Kommunikationsschnittstelle besonders rasch möglich ist, da keine Kommunikations- bzw. Signalisierungsdaten ausgetauscht werden müssen.

Gemäß einer weiteren Ausbildung ist auch vorgesehen, dass der Energiespeicher, der elektrische Kontaktgeber und der Microcontroller einen elektrischen Stromkreis bilden, insbesondere dass durch einen betätigten Kontaktgeber, ein geschlossener Stromkreis ausgebildet ist. Diese Ausbildung hat den besonderen Vorteil, dass tatsächlich nur bei gedrücktem Kontaktgeber der Microcontroller mit elektrischer Energie versorgt wird und auch nur in diesem Zeitraum Energie verbrauchen kann, was die erreichbare Betriebsdauer deutlich erhöht. Der Microcontroller kann eine Schaltungseinheit aufweisen, die dazu ausgebildet ist, einen Abfall der Versorgungsspannung nach Betätigungsende zu erkennen und den Microcontroller in einen geordneten Zustand zu versetzen. Dazu wird diese Schaltungseinheit einen kleinen Energiespeicher aufweisen, der ausreichend Energie enthält, um diesen Vorgang kontrolliert durchführen zu können.

Da Microcontroller gegebenenfalls einige Zeit zum Start benötigen, ist gemäß einer Weiterbildung alternativ auch vorgesehen, dass der elektrische Kontaktgeber mit einem Erfassungseingang des Microcontrollers verbunden ist. Der Microcontroller überwacht den Schaltzustand dieses Erfassungseingangs und sendet bei Kontaktgabe durch den elektrischen Kontaktgeber ein Datentelegramm über die Kommunikationsschnittstelle an die Basisstation.

Für die Erreichung einer langen Betriebsdauer ist es auch von besonderem Vorteil, wenn der Microcontroller einen Ruhezustand-Betriebsmodus aufweist, insbesondere einen Tief-Ruhezustand. Ein Ruhezustand eines Microcontrollers hat den Vorteil, dass alle betriebsrelevanten Parameter im Microcontroller hinterlegt sind und somit bei Rückkehr aus dem Ruhezustand sofort verfügbar sind, insbesondere ohne eine zeitaufwändige Initialisierung durchlaufen zu müssen.

Ein Tief-Ruhezustand ist insbesondere dadurch gekennzeichnet, dass der Microcontroller im Wesentlichen keine Energie verbraucht. In diesem Betriebszustand sind im Microcontroller nur jene Bausteine aktiv, die benötigt werden, um den Microcontroller aus dem Tief-Ruhezustand "aufzuwecken".

Nach einer Weiterbildung ist vorgesehen, dass die Basisstation einen weiteren Schaltausgang aufweist, welcher gegebenenfalls über eine Schnittstelle mit einem Datenverarbeitungssystem verbunden ist. Neben dem Auslösen der Bestätigung der durchgeführten Kommissionierung kann es beispielweise erforderlich sein, eine zusätzliche Funktion auslösen zu können. Gegebenenfalls kann es nicht möglich sein, den mit dem Steuerungseingang der Ablaufsteuerung verbundenen Schaltausgang abzugreifen, um daraus ein weiteres Steuersignal ableiten zu können. Gemäß dieser Weiterbildung ist daher ein weiterer, eigenständiger Schaltausgang vorhanden. Die beiden Schaltausgänge werden bevorzugt gleichzeitig aktiviert. Nach einer möglichen Weiterbildung kann es jedoch auch vorgesehen sein, dass der weitere Schaltausgang zeitverzögert aktiviert wird, oder dass ein bestimmtes Schaltmuster erzeugt wird, beispielweise ähnlich einem aus der Computertechnik bekannten "Doppelklick".

Es kann beispielsweise vorgesehen sein, dass mit der Bestätigung des Kommissioniervorgangs auch eine Aktion auf einem externen Datenverarbeitungssystem ausgelöst werden soll. Beispielsweise kann die Arbeitsstation Teil eines Schulungssystems sein, wo angehende Kommissionierpersonen die künftigen Arbeiten trainieren können. Bei einem solchen Schulungssystem wird sehr wahrscheinlich parallel auch eine Präsentation laufen, wobei die Darstellungswechsel zweckmäßigerweise parallel zum Kommissioniervorgang erfolgen sollen. Daher ist vorgesehen, dass die Schnittstelle durch einen Controller einer Mensch-Maschine-Schnittstelle gebildet ist, beispielsweise durch einen Controller einer (Computer-)Tastatur. Ein solcher Controller ist über eine Schnittstelle, beispielweise USB, mit einem Datenverarbeitungssystem verbunden und kann somit jene Steuerungskommandos schicken, die zur Steuerung der Präsentation erforderlich sind.

Eine Weiterbildung besteht auch darin, dass die Empfangseinheit dazu ausgebildet ist, eine Bestätigungsnachricht an die Mobileinheit zu übermitteln, insbesondere über die Kommunikationsschnittstelle an den Microcontroller. Aufgrund mechanischer Abläufe und Kommunikationsabläufe an der Arbeitsstation und/oder im Lager-Verwaltungssystem kann es vorkommen, dass nach Betätigen des Betätigungselements etwas Zeit vergeht, bis die Arbeitsstation die folgende Aktion auslöst. Auch wenn diese Zeitverzögerung nur sehr gering ist, kann sie im sehr engen Arbeitstakt einer Kommissionierperson eine Irritation verursachen. Nach dieser Weiterbildung kann nun an die Kommissionierperson eine Rückmeldung gegeben werden, dass die Bestätigung von der Basisstation empfangen, ausgewertet und an die Ablaufsteuerung der Arbeitsstation oder an ein übergeordnetes Lager-Verwaltungssystem weitergeleitet wurde. Der Kommissionierer kann sich also bereits auf den nächsten Vorgang einstellen, auch wenn an der Arbeitsstation gegebenenfalls noch nicht zu erkennen ist, dass diese Aktion bereits im Laufen ist, beispielweise aufgrund des Umgebungslärms und/oder aufgrund von die Sicht behindernden Gehäuseteilen.

Dahingehend besteht eine Weiterbildung auch darin, dass die Mobileinheit einen mit dem Microcontroller verbundenen Signalgeber aufweist. Dieser Signalgeber kann beispielweise optisch und/oder akustisch wirkend ausgebildet sein. Nach einer weiteren Ausführung kann der Signalgeber auch mechanisch wirkend ausgebildet sein, beispielweise als Vibrationselement. Insbesondere können eine oder auch mehrere der möglichen Ausgestaltungen realisiert sein.

Eine Weiterbildung besteht auch darin, dass die Mobileinheit ein Gehäuse aufweist, welches durch einen Grundkörper und das Betätigungselement gebildet ist, wobei der Energiespeicher, der Kontaktgeber und der Microcontroller im Gehäuse aufgenommen sind. Somit wird eine kompakte, integrierte Einheit geschaffen, die für den teilweise durchaus rauen Kommissionieralltag robust ausgeführt ist und aufgrund des kompakten Aufbaus auch eine hohe Akzeptanz erwarten lässt.

Eine vorteilhafte Weiterbildung besteht auch darin, dass der Grundkörper ein Haftelement zur lösbares Anordnung der Mobileinheit an einem Bauteil der Arbeitsstation aufweist. Das Haftelement kann beispielweise als Magnet und/oder als Haftfuß ausgebildet sein. Da bei einer Arbeitsstation im Arbeitsbereich des Bedieners, viele Bauteile, bevorzugt metallische Bauteile, mit unterschiedlich ausgerichteten Flächen vorhanden sein werden, ist die Ausbildung mit Magneten bevorzugt. Der Bediener kann somit die Mobileinheit direkt in seinem Nahbereich an einer Frontfläche der Arbeitsstation anbringen und genau auf die eigenen arbeitsphysiologischen Bedürfnisse anpassen.

Eine weitere vorteilhafte Weiterbildung besteht darin, dass der Grundkörper ein elastisches Bügelelement aufweist, welches dazu ausgebildet ist, den Grundkörper auf einem Kleidungsstück anzubringen, welches Kleidungsstück vom Bediener getragen wird. Somit lässt sich realisieren, dass sich die Mobileinheit immer an derselben Stelle am Körper befindet, unabhängig von der jeweiligen Position des Bedieners in Bezug zur Arbeitsstation. Nach einer möglichen Ausführung kann das Bügelelement als Klemme ausgebildet sein, wodurch die Mobileinheit beispielweise an einem Gürtel oder an einer Kleidungsaußentasche angeordnet sein.

Es erweist sich auch von Vorteil, wenn das Betätigungselement einhändig betätigbar ist. Die Einhandbedienung ermöglicht nicht nur eine einfache Bedienung, sondern es kann ein Bearbeitungsauftrag besonders schnell durchgeführt werden, da bereits während der Arbeitsbewegung das Ende eines Bearbeitungsauftrags bestätigt werden kann. Handelt es sich beispielsweise um einen Kommissionierauftrag, bei dem eine Ware von einer Kommissionierperson mit einer Hand von einem Quell-Ladungsträger entnommen und in einen Ziel-Ladungsträger abgelegt wird, kann unmittelbar nachdem die Ware abgelegt wurde, mit der anderen Hand das Ende des Kommissionierauftrags bestätigt werden.

Im Hinblick auf einen möglichst physiologischen Arbeitsablauf ist nach einer Weiterbildung vorgesehen, dass die Mobileinheit an einem Handschuh angeordnet ist, welcher Handschuh vom Bediener getragen wird. Nach dieser Ausführung umfasst die Arbeitsstation für ein Kommissioniersystem zumindest einen Handschuh.

Nach einer möglichen Ausführung kann vorgesehen werden, dass der Handschuh einen Handrückenabschnitt, einen Handflächenabschnitt und Fingerabschnitte aufweist und dass entweder das Betätigungselement derart am Handflächenabschnitt angeordnet ist, dass es mit einem der Fingerabschnitte erreichbar und betätigbar ist, oder das Betätigungselement derart an einem ersten Fingerabschnitt der Fingerabschnitte angeordnet ist, dass es mit einem zweiten Fingerabschnitt der Fingerabschnitte erreichbar und betätigbar ist.

Der Handschuh ist ein Fingerhandschuh oder ein Fausthandschuh. Beide Handschuhformen haben einen Handrückenabschnitt, einen Handflächenabschnitt und Fingerabschnitte. Der Fingerhandschuh umfasst fünf Fingerabschnitte. Jeder Fingerabschnitt umschließt einen Finger, wobei ein erster Fingerabschnitt jeweils dem Zeigefinger, Mittelfinger, Ringfinger und kleinen Finger und ein zweiter Fingerabschnitt dem Daumen zugeordnet sind. Der Fausthandschuh weist im Bereich der vier Finger einen ersten Fingerabschnitt auf, der alle vier Finger gemeinsam umschließt, so dass die vier Finger in einer gemeinsamen Hülle liegen, und einen zweiten Fingerabschnitt auf, der den Daumen umschließt.

Mit einer solchen Ausführung wird auch ein erhöhter Bedienkomfort für den Bediener erreicht.

Bei einer Kommissioniertätigkeit werden vom Bediener zumeist Handschuhe getragen, daher hat diese Weiterbildung den besonderen Vorteil, dass die zusätzliche Bewegung zum Auslösen der Bestätigung des durchgeführten Kommissioniervorgangs minimiert ist. Um die Greiftätigkeit nicht zu beeinträchtigen, werden der Energiespeicher und der Microcontroller, bevorzugt an der Handschuhaußenseite, insbesondere an einem Handrückenabschnitt, angeordnet. Auch das Betätigungselement wird bevorzugt so angeordnet sein, dass es während des Kommissioniervorgangs zu keiner irrtümlichen Betätigung kommen kann. Diesbezüglich kann gemäß einer weiteren Ausführung vorgesehen sein, dass auch das Betätigungselement, bevorzugt an der Handschuhaußenseite, insbesondere an einem Handrückenabschnitt, angeordnet ist, sodass dieses nur durch eine bewusste Greifhandlung mit der zweiten Hand erreichbar ist. Das Betätigungselement kann - nicht einschränkend - beispielweise im Bereich des ersten Fingerglieds des Zeigefingers (erster Fingerabschnitt) angeordnet sein, sodass es mit dem Daumen (zweiter Fingerabschnitt) betätigt werden kann. Um eine zufällige Fehlauslösung durch einen Warenkontakt zu vermeiden, kann gemäß einer Weiterbildung vorgesehen sein, dass das Betätigungselement eine (kurze) Zeitspanne gedrückt werden muss, bevor die Bestätigungsaktion ausgelöst wird.

Als Redundanz, damit es beispielweise bei einer Störung der Fernbedienungsvorrichtung zu keiner wesentlichen Störung des Kommissionierablaufs kommt, ist gemäß einer Weiterbildung vorgesehen, dass die Basisstation ein weiteres Betätigungselement mit einem elektrischen Kontaktgeber aufweist, welcher mit dem Steuerungseingang der Ablaufsteuerung verbunden ist, insbesondere parallel zum angeschlossenen Schaltausgang der Mobileinheit, und/oder dass an der Arbeitsstation ein solches weiteres Betätigungselement angeordnet ist, dessen Kontaktgeber mit der Empfangs- und Auswerteeinheit verbunden ist. Beispielsweise kann somit ein bestehendes Bestätigungselement zusammen mit der Fernbedienungsvorrichtung verwendet werden.

Die Fernbedienungsvorrichtung erweist sich auch von Vorteil, da diese jederzeit an einer bestehenden Arbeitsstation eingesetzt werden kann, insbesondere indem der Schaltausgang der Mobileinheit mit dem Steuerungseingang der Ablaufsteuerung verbunden wird, an welchem bereits das bestehende Betätigungselement angeschlossen ist.

Nachfolgend findet sich eine Definition hierin verwendeter Begriffe.

Ein Auftrag wird als Datensatz elektronisch erfasst und von einer Datenverarbeitungseinheit verarbeitet. Der Auftrag ist nicht zwingenderweise mit einem Kommissionierauftrag gleichzusetzen, sondern kann auch ein Umpackauftrag, Nachschubauftrag, und dgl. sein. Unter einem Kommissionierauftrag bzw. allgemein einem Auftrag, wird die Zusammenstellung angeforderter Waren eines Kundenauftrags verstanden. Eine Kundenbestellung umfasst zumindest einen Auftrag. Jeder Auftrag umfasst eine oder mehrere Auftragszeilen. Spezifiziert der Auftrag mehrere Auftragszeilen, so werden unterschiedliche Waren benötigt. Im E-Commerce sind die Losgrößen klein, sodass eine verhältnismäßig hohe Anzahl an unterschiedlichen Aufträgen mit jeweils wenigen Auftragszeilen vorliegt. Von einem Umpackauftrag wird gesprochen, wenn beispielweise Waren im Wareneingang von einem Anliefergebinde (erster Ladungsträger) auf einen oder in einen zweiten Ladungsträger umzuladen sind. Unter einem Nachschubauftrag versteht man das Auffüllen von Waren auf einem oder in einem Ladungsträger und/oder ein Auffüllen des Lagers im Zuge eines Lagernachschubs.

Unter Ware oder SKU (stock keeping unit) wird die kleinste kommissionierbare Warenverpackung verstanden. Diese Einheit kann aus einem einzelnen Artikel bestehen, es ist jedoch auch möglich, dass eine Ware mehrere Artikel umfasst, die jedoch für die Kommissionierung nicht trennbar zusammengefasst sind.

In Abhängigkeit von der Ausbildung des Ladungsträgers kann die Ware im Ladungsträger angeordnet sein, wenn dieser beispielweise als Behälter ausgebildet ist. Im Fall einer Ausbildung als Tablar, wird die Ware am Ladungsträger angeordnet sein. Es wird explizit darauf hingewiesen, dass hierin beide Begriffe gleichbedeutend verwendet werden und durch die Verwendung von in oder am Ladungsträger keine Festlegung auf eine konkrete Ausbildung des Ladungsträgers erfolgt.

Die Aufgabe der Erfindung wird auch dadurch gelöst, dass ein Kommissioniersystem mit zumindest einer Arbeitsstation, wie oben beschrieben, ausgestattet wird.

Zum besseren Verständnis der Erfindung wird diese anhand der nachfolgenden Figuren näher erläutert.
- Fig. 1: zeigt im Überblick eine Fernbedienungsvorrichtung in einem Kommissioniersystem;
- Fig. 2: a) und b) zeigen mögliche Ausführungen der Fernbedienungsvorrichtung;
- Fig. 3: a) bis c) zeigen mögliche Ausführungen einer Mobileinheit.

Es wird festgehalten, dass die Darstellung nur einen sehr kleinen Ausschnitt aus einer tatsächlichen Realisierung eines Kommissioniersystems darstellt. Insbesondere ist zumeist nur eine minimale Konfiguration dargestellt, um die einzelnen Elemente des Kommissioniersystems beschreiben zu können. Ein realisiertes System ist deutlich größer und es werden vor allem die einzelnen Komponenten größer und/oder mehrfach vorhanden sein.

Die einzelnen Komponenten des Kommissioniersystems, insbesondere das Lagersystem und die Fördertechnik, sind nicht Gegenstand dieser Erfindung, daher wird hierin auch nicht weiter darauf eingegangen. Beispielhaft, aber keinesfalls abschließend, kann das Lagersystem ein Shuttle-Lager und die Fördertechnik eine Rollen-Fördertechnik sein. Anstatt einer stationären Fördertechnik können auch autonome Transportfahrzeuge (AGV "Automated Guided Vehicle" oder AMR "Autonomous Mobile Robots") eingesetzt werden.

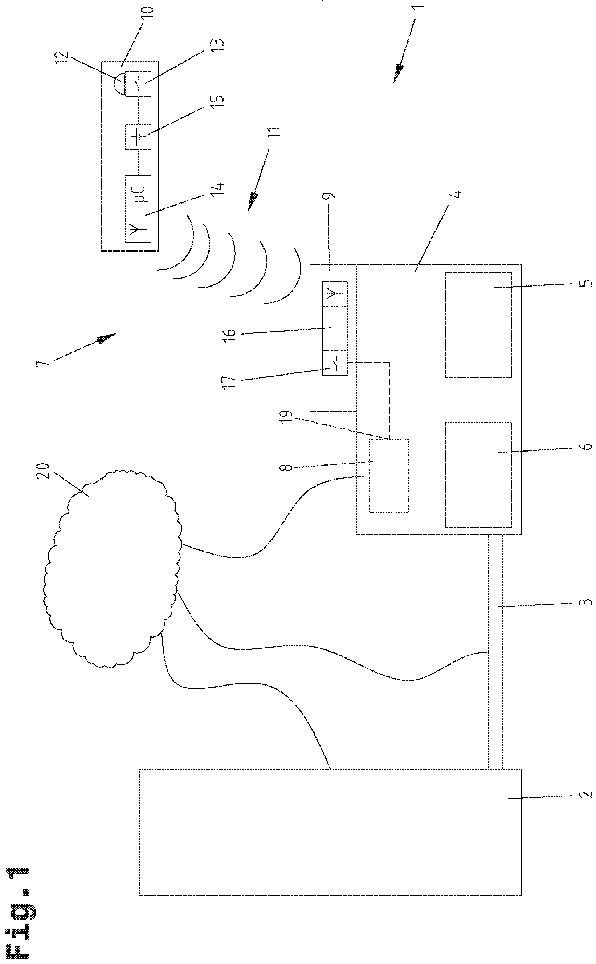

Figur 1 zeigt ein Kommissioniersystem 1 umfassend ein Lagersystem 2 und eine über eine Fördertechnik 3 warenflusstechnisch an das Lagersystem 2 angebundene Arbeitsstation 4 mit Fernbedienungsvorrichtung. Bei der Abarbeitung von Kommissionieraufträgen an der Arbeitsstation 4, wird von einem Bediener Ware aus einem Quell-Ladungsträger 5 entnommen und in einen Ziel-Ladungsträger 6 umgelagert. Die Umlagerung und damit die Erledigung des Kommissionierauftrags, wird durch Betätigen eines Betätigungselements eines Bestätigungs-Steuerelements 7 quittiert. Eine Ablaufsteuerung 8 der Arbeitsstation 4 wertet dieses Bestätigungssignal aus und führt einen dem aktuellen Kommissionierauftrag folgenden Kommissionierschritt aus. Dies kann beispielweise ein Austausch beider Ladungsträger 5, 6 sein, wenn der folgende Kommissionierschritt neue Quell- Ladungsträger 5 und Ziel-Ladungsträger 6 benötigt. Der folgende Kommissionierschritt kann auch darin bestehen, dass nur einer der beiden Ladungsträger 5, 6 ausgetauscht wird. Unter einem Austausch eines Ladungsträgers 5, 6 wird verstanden, dass der Ladungsträger 5, 6 automatisch aus der Bereitstellungsposition an der Arbeitsstation 4 abtransportiert und ein neuer - zumeist der nächste - Ladungsträger 5, 6 an die freigewordene Bereitstellungsposition transportiert wird, sodass der Bediener den folgenden Kommissionierschritt durchführen kann. Um diesen Bereitstellungswechsel rasch durchführen zu können, wird die Arbeitsstation 4 auch Fördertechnik-Komponenten aufweisen, die einen nicht blockierenden An- und Abtransport von Ladungsträgern 5, 6 durchführen kann. Auch wird die Fördertechnik 3 zwischen der Arbeitsstation 4 und dem Lagersystem 2 zumindest in Bereichen mehrbahnig ausgeführt sein, um eine entsprechende Transportleistung zwischen Arbeitsstation 4 und Lagersystem 2 bereitstellen zu können.

Die Arbeitsstation 4 kann aber auch dazu ausgebildet sein, das erfasste Bestätigungssignal an ein übergeordnetes Lager-Verwaltungssystem 20 weiterzuleiten, welches die Koordination der weiteren Schritte im Kommissionierablauf durchführt, insbesondere die Koordination der Abläufe im Lagersystem 2, auf der Fördertechnik 3 und der Arbeitsstation 4, und somit dieser das Kommando zur Durchführung eines Ladungsträgerwechsels übermittelt.

Es ist nun vorgesehen, dass das Bestätigungs-Steuerelement 7 eine Basisstation 9 und eine Mobileinheit 10 aufweist, zwischen welchen eine gekoppelte, drahtlose Daten-Kommunikationsverbindung 11 besteht. Durch die Kopplung ist eine eindeutige Zuordnung von Mobileinheit 10 und Basisstation 9 - und damit der Arbeitsstation 4 - gewährleistet und ist somit eine Fehlbedienung einer anderen Arbeitsstation verunmöglicht. Da die Kommunikationsverbindung nur während der Betätigung des Betätigungselements besteht, müsste ohne die vorgeschlagene Kopplung, bei jedem Sendevorgang die Kommunikationsverbindung neu aufgebaut werden, was Zeit und vor allem Energie kostet.

Die Mobileinheit 10 weist ein Betätigungselement 12 mit einem elektrischen Kontaktgeber 13 auf. Das Betätigungselement 12 kann beispielweise durch einen Taster, eine Wippe, eine Klappe usw. gebildet sein. Der elektrische Kontaktgeber 13 ist bevorzugt durch einen Schaltkontakt gebildet. Die Mobileinheit 10 umfasst ferner einen Microcontroller (µC) 14 und einen elektrischen Energiespeicher 15 zur Versorgung des Microcontrollers 14. Der Microcontroller 14 ist zur Auswertung des Schaltzustands des Kontaktgebers 13 ausgebildet und sendet bei einer erkannten Kontaktgabe ein Datenpaket über die Kommunikationsverbindung 11 an die Basisstation 9. Zum Empfang von Datenpakten über die aufgebaute Kommunikationsverbindung 11 weist die Basisstation 9 eine Empfangs- und Auswerteeinheit 16 mit einer Empfangsvorrichtung auf. Die Empfangs- und Auswerteeinheit 16 weist ferner noch einen Schaltausgang 17 auf, der mit einem Steuerungseingang 19 der Ablaufsteuerung 8 verbunden ist. Wird von der Empfangs- und Auswerteeinheit 16 ein Datenpaket empfangen, wird es ausgewertet und geprüft, ob die sendende Mobileinheit 10 dazu berechtigt ist, oder ob es zu einer Fehlkommunikation gekommen ist. Nach erfolgreicher Prüfung wird der Schaltausgang 17 aktiviert, woraufhin die Ablaufsteuerung 8 der Arbeitsstation 4 den nächsten Schritt auslöst.

Nach einer weiteren möglichen Ausführung kann vorgesehen sein, dass aufgrund des elektrischen Designs bzw. der elektrischen Beschaltung des Microcontrollers 14, beispielweise indem kleine, kurzfristig Energie speichernde Kapazitäten vorgesehen sind, die Möglichkeit besteht, dass die Kommunikationsverbindung 11 auch noch eine kurze Zeit nach einem Lösen der Betätigung des Betätigungselements 12 aufrecht bleiben kann, beispielsweise und nicht abschließend, um explizit auch den Status des Lösens der Betätigung an die Ablaufsteuerung 8 der Arbeitsstation 4 zu übertragen, und/oder um den Microcontroller 14 in einen geordneten Abschalt- oder Ruhezustand zu versetzen. Die Kapazitäten sind insbesondere nicht dazu vorgesehen, einen (Voll-)Betrieb aufrechtzuerhalten, da die zusätzlichen Ladevorgänge den Gesamtenergieverbrauch deutlich erhöhen würden. Es soll lediglich so viel Energie vorhanden sein, um ein ungeordnetes Betriebsende des Microcontrollers zu verhindern.

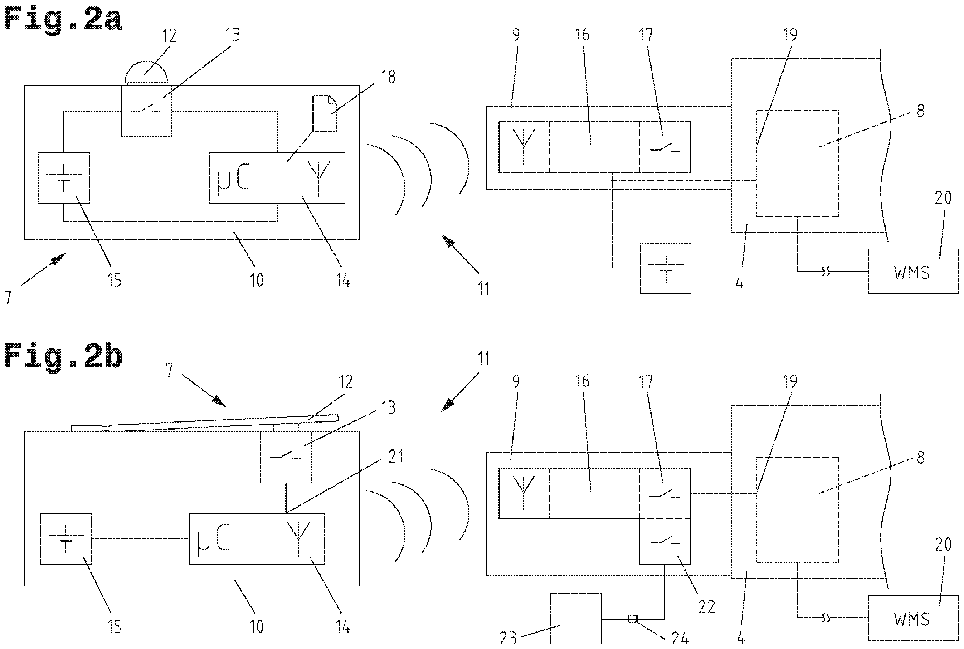

Figur 2 a) und b) zeigen zwei mögliche Ausführungen der elektrischen Beschaltung des Bestätigung-Steuerelements 7. Beiden dargestellten Ausführungen ist gemein, dass die Kommunikationsverbindung 11 nur während der Zeit aktiv ist, in der an der Mobileinheit 10 das Betätigungselement 12 betätigt ist, und dadurch der elektrische Kontaktgeber 13 aktiviert ist.

In der bevorzugten Ausführung nach Fig. 2 a) ist der Kontaktgeber 13 als Schließkontakt ausgebildet und bildet zusammen mit dem elektrischen Energiespeicher 15 und dem Microcontroller 14 einen elektrischen Stromkreis. Gemäß dieser Ausführung ist der Stromkreis nur dann geschlossen, wenn das Betätigungselement 12 und damit auch der Kontaktgeber 13 betätigt ist.

Die Gegenstelle der Kommunikationsverbindung 11 ist die Basisstation 9 an der Arbeitsstation 4, insbesondere die Empfangs- und Auswerteeinheit 16, welche eine eigenständige Energieversorgung aufweist oder von der Arbeitsstation 4 mit elektrischer Energie versorgt wird und somit permanent für den Empfang von Datentelegrammen der Mobileinheit 10 ausgebildet ist. Die über die Kommunikationsverbindung 11 eingehenden Datentelegramme werden von der Empfangs- und Auswerteeinheit 16 empfangen und es wird im Zuge der Auswertung geprüft, ob das Datentelegramm von einer berechtigten Mobileinheit 10 gesendet wurde.

Die Empfangs- und Auswerteeinheit 16 weist ferner einen Schaltausgang 17 auf, der nach Auswertung und positiver Prüfung des empfangenen Datentelegramms aktiviert wird. Dieser Schaltausgang 17 ist mit einem Steuerungseingang 19 der Ablaufsteuerung 8 der Basisstation 9 verbunden. Über ein Signal an diesem Steuerungseingang 19 werden von der Ablaufsteuerung 8 die Schritte des nächsten anstehenden Kommissioniervorgang ausgelöst. Gegebenenfalls kann das Signal aber auch nur an das übergeordnete Lager-Verwaltungssystem (WMS) 20 weitergeleitet werden, welches dann die Koordination der nächsten Schritte durchführt. Details der einzelnen Abläufe in einem Kommissioniersystem, insbesondere an und im Umfeld einer Arbeitsstation, sind nicht Gegenstand dieser Erfindung. Daher wird hier nicht weiter darauf eingegangen.

Nach einer Weiterbildung ist vorgesehen, dass in einem Speichermittel des Microcontrollers 14 Zugangsdaten 18 der Basisstation 9 hinterlegt sind, insbesondere Zugangsdaten 18 der Empfangs- und Auswerteeinheit 16. Somit ist kein zeit- und energieintensiver Neuaufbau der Kommunikationsverbindung 11 erforderlich, wenn der Microcontroller 14 aktiviert wird.

Figur 2 b) zeigt eine weitere mögliche Ausführung des Bestätigungs-Steuerungselements 7. Hier ist die elektrische Beschaltung der Komponenten der Mobileinheit 10 unterschiedlich ausgeführt. Der Energiespeicher 15 versorgt den Microcontroller 14 mit elektrischer Energie, der elektrische Kontaktgeber 13 ist mit einem Erfassungseingang 21 des Microcontrollers 14 verbunden, welcher den Status des Kontaktgebers 13 auswertet und dann ein Datentelegramm generiert. Die weiteren Merkmale sind der obigen Beschreibung zu entnehmen.

Die Empfangs- und Auswerteeinheit 16 an der Basisstation 9 weist einen weiteren Schaltausgang 22 auf, der bevorzugt zeitgleich mit dem ersten Schaltausgang 17 aktiviert wird. Nach einer möglichen weiteren Ausführung kann dieser weitere Schaltausgang 22 auch eine zeitliche Verzögerung, oder ein definiertes Schaltmuster realisieren. Bevorzugt ist dieser weitere Schaltausgang 22 mit einem Präsentationssystem 23 verbunden, um eine parallel zum Kommissioniervorgang auf der Arbeitsstation 4 ablaufende Präsentation zu steuern, gegebenenfalls unter Zwischenschaltung einer Schnittstelle 24.

In den Figuren 2 a) und b) ist ein weiterer Vorteil der Fernbedienungsvorrichtung dargestellt, wenn gemäß einer möglichen Ausführung, die Basisstation 9 nachträglich an einer Arbeitsstation 4 angeordnet wird. Zur Grundausstattung einer Arbeitsstation 4 gehört zumeist ein Bestätigungs-Steuerelement 7, insbesondere auch, um beispielweise bei einer Störung der Fernbedienungsvorrichtung, Kommissioniertätigkeiten durchführen zu können. Die Basisstation 9 wird bevorzugt als eigenständige Einheit ausgebildet sein, sodass lediglich der Schaltausgang 17 der Empfangs- und Auswerteeinheit 16 mit dem Steuerungseingang 19 der Ablaufsteuerung 8 verbunden werden muss. Insbesondere bedeutet dies zumeist, dass lediglich der Schaltausgang 17 der Empfangs- und Auswerteeinheit 16 parallel zu einem fest an der Arbeitsstation 4 installiertem Betätigungselement bzw. elektrischer Kontaktgeber geschaltet werden muss.

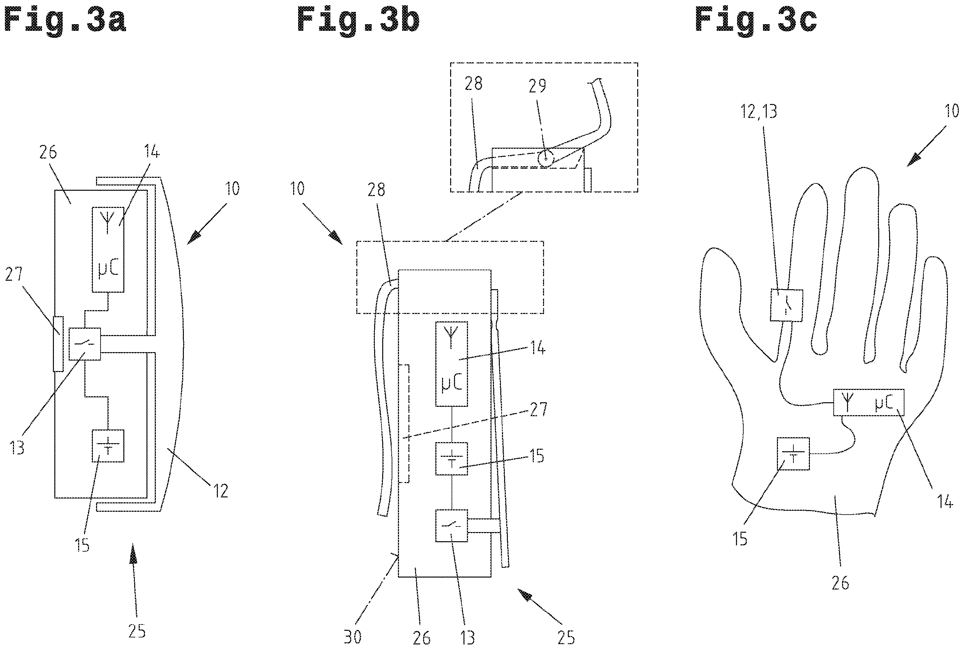

Die Figuren 3 a) bis c) zeigen mögliche Gehäuseausführungen der Mobileinheit 10. Es wird explizit darauf hingewiesen, dass die Figuren stark vereinfacht sind und insbesondere nur die grundlegende Ausbildung zeigen. Mechanisch/konstruktive Details, beispielweise um die Elemente in ihrer Position zu halten, beispielweise Führungen und Rückstellelemente, sind in den Figuren aus Darstellungsgründen nicht gezeigt, da sie für die Erfindung nicht von Bedeutung sind.

Figur 3 a) zeigt eine erste Ausführung eines Gehäuses 25, welches einen Grundkörper 26 und ein Betätigungselement 12 aufweist. Im Grundkörper 26 sind der Energiespeicher 15, der Kontaktgeber 13 und der Microcontroller 14 aufgenommen. Das Betätigungselement 12 ist gemäß einer möglichen Ausführung als eine den gesamten Grundkörper 26 überdeckende Kappe ausgebildet. Dies hat den Vorteil, dass der Bediener nicht genau zielen muss, um das Betätigungselement 12 zu betätigen und dadurch das Senden eines Datentelegramms auszulösen, da die gesamte Kappe als auslösendes Element dient. Demgegenüber ist es zur Sicherstellung einer bewussten Auslösung auch möglich, dass das Betätigungselement 12 als Druccknopf ausgebildet ist, der gegebenenfalls zusätzlich noch durch eine konstruktive Ausführung gegen eine zufällige Betätigung geschützt ist - beispielweisedurch eine versenkte Anordnung und/oder eine umgebende Umrandung.

Nicht dargestellt sind mechanische Komponenten zur Halterung des Betätigungselements 12, insbesondere elastische Elemente, um das Betätigungselement 12 standardmäßig in seiner nicht-betätigten Position zu halten, insbesondere so stabil, dass eine unabsichtliche Betätigung verhindert wird.

Gemäß dieser Ausführung ist vorgesehen, dass im Grundkörper 26 zumindest ein Haftelement 27 angeordnet ist, welches beispielweise als Saugknopf oder bevorzugt als Magnet ausgebildet sein kann. Über dieses Haftelement kann die Mobileinheit 10 an jeder ebenen bzw. metallischen Fläche angeordnet werden. Derartige Flächen sind bei einer Arbeitsstation 4 im Bereich des Bedieners vorhanden, sodass dieser die Mobileinheit 10 bestmöglich an seine Bedürfnisse passend anordnen kann.

Fig. 3 b) zeigt eine weitere mögliche Ausführung der Mobileinheit 10, insbesondere des Grundkörpers 26, welche Ausführung zur Anordnung an einem Bekleidungsstück ausgebildet ist. Dazu weist der Grundkörper 26 ein elastisches Bügelelement 28 auf, welches beispielweise als Klammer ausgeführt sein kann. Dieses Bügelelement 28 ermöglicht es einem Bediener, die Mobileinheit 10 beispielweise an einem Gürtel, an einer Tasche usw. anzuordnen und auch wieder abzunehmen. Das Bügelelement 28 ist dabei derart konstruktiv ausgebildet, dass es an einer Vielzahl unterschiedlich dicker Bekleidungsteilen angeordnet werden kann. Das Kleidungsstück, an welchem die Mobileinheit 10 angeordnet ist, wird zwischen dem Bügelelement 28 und der Rückwand 30 des Grundkörpers 26 geklemmt.

Fig. 3 b) zeigt in einer Detaildarstellung noch eine weitere mögliche Ausführung, nach der vorgesehen ist, dass das Bügelelement 28 verschwenkbar ausgebildet ist. Dazu ist das Bügelelement 28 um eine Achse 29 im Grundkörper 26 verschwenkbar angeordnet. Bei einer Anordnung an einem Kleidungsstück ist, wie in der Gesamtdarstellung in Fig. 3b dargestellt, das Bügelelement 28 eingeschwenkt, sodass die Mobileinheit 10 an eine Kleidung geklemmt werden kann. Das Bügelelement 28 kann aber auch um die Achse 29 ausgeschwenkt werden - nach einer Freigabe des Bügelelements 28 aus seiner eingeschwenkten Position - sodass die Rückseite 30 des Grundkörpers 26 wieder frei zugänglich ist. Insbesondere liegt das Haftelement 27 wieder frei, um die Mobileinheit 10 wie in Fig. 3a beschrieben, an der Arbeitsstation 4 anordnen zu können.

Eine weitere mögliche Ausführung ist in Fig. 3 c) dargestellt. Gemäß dieser Ausführung ist die Mobileinheit 10 an einem Handschuh angeordnet. Der Handschuh ist in einer Ansicht auf den Handrückenabschnitt dargestellt. Der Handschuh umfasst einen Handrückenabschnitt, einen Handflächenabschnitt und Fingerabschnitte, die vorzugsweise miteinander vernäht sind. Der Handschuh bildet den Grundkörper 26. Dadurch ist die Mobileinheit 10 immer unmittelbar am Bediener, sodass sich für diesen die geringsten Wege ergeben. Ein kompaktes Fernbedienungselement wird erreicht, wenn dieses am Handschuh angeordnet ist, da das Betätigungselement 12 bzw. der elektrische Kontaktgeber 13, wie beispielweise dargestellt, besonders griffgünstig am Zeigefinger angeordnet sein kann, oder so angeordnet ist, dass die Betätigung mit einem Finger der anderen Hand erfolgen muss, um eine Fehlauslösung zu verhindern. Um die Kommissioniertätigkeit durch die angeordneten Komponenten nicht zu beeinträchtigen, sind der Microcontroller 14 und der Energiespeicher 15 bevorzugt im Bereich des Handrückens angeordnet. Die Anforderungen der Arbeitssicherheit erfordern ebenfalls einen kompakten Aufbau, da die angeordneten Komponenten nicht so voluminös sein dürfen, dass sie den Bediener in seiner Arbeit behindern.

Abschließend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

Die Ausführungsbeispiele zeigen mögliche Ausführungsvarianten des, wobei an dieser Stelle bemerkt sei, dass die Erfindung nicht auf die speziell dargestellten Ausführungsvarianten derselben bzw. desselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang der Ansprüche mit umfasst.

Der Ordnung halber sei abschließend darauf hingewiesen, dass zum besseren Verständnis der Verfahrensschritte, Zeichnungselemente teilweise unmaßstäblich und/oder vergrößert und/oder verkleinert dargestellt wurden.

### Bezugszeichenaufstellung

- 1: Kommissioniersystem
- 2: Lagersystem
- 3: Fördertechnik
- 4: Arbeitsstation
- 5: Quell-Ladungsträger
- 6: Ziel-Ladungsträger
- 7: Bestätigungs-Steuerelement
- 8: Ablaufsteuerung
- 9: Basisstation
- 10: Mobileinheit
- 11: Kommunikationsverbindung
- 12: Betätigungselement
- 13: elektrischer Kontaktgeber
- 14: Microcontroller
- 15: elektrischer Energiespeicher
- 16: Empfangs- und Auswerteeinheit
- 17: Schaltausgang
- 18: Zugangsdaten
- 19: Steuerungseingang
- 20: Lager-Verwaltungssystem
- 21: Erfassungseingang
- 22: Schaltausgang
- 23: Präsentationssystem
- 24: Schnittstelle
- 25: Gehäuse
- 26: Grundkörper
- 27: Haftelement
- 28: Bügelelement
- 29: Schwenkachse
- 30: Rückseite

## Patentansprüche

1. Kommissioniersystem (1) mit einem Lagersystem (2) und zumindest einer Arbeitsstation, an welcher ein Quell-Ladungsträger (5) und ein Ziel-Ladungsträger (6) eines Auftrags bereitstellbar sind, wobei vom Bediener gemäß einem Auftrag eine Umlagerung zumindest einer Wareneinheit aus dem Quell-Ladungsträger (5) in den Ziel-Ladungsträger (6) erfolgt, wobei die Arbeitsstation
- durch eine Fördertechnik (3) mit dem Lagersystem (2) warenflusstechnisch verbunden ist, und
- eine Fernbedienungsvorrichtung umfasst,
- eine Ablaufsteuerung (8) und ein damit verbundenes Bestätigungs-Steuerelement (7) umfasst, welche Ablaufsteuerung (8) dazu ausgebildet ist, nach Betätigung des Bestätigungs-Steuerelements (7) durch den Bediener, einen dem aktuellen Auftrag folgenden Schritt auszulösen,
wobei
das Bestätigungs-Steuerungselement (7) eine Basisstation (9) und eine Mobileinheit (10) aufweist, zwischen denen eine gekoppelte drahtlose Daten-Kommunikationsverbindung (11) besteht,
wobei die Basisstation (9) eine Empfangs- und Auswerteeinheit (16) aufweist, welche stets zum Empfang von Datentelegrammen der Mobileinheit (10) ausgebildet ist und einen Schaltausgang (17) aufweist, der mit einem Steuerungseingang (19) der Ablaufsteuerung (8) verbunden ist,
wobei die Mobileinheit (10) ein Betätigungselement (12) mit einem elektrischen Kontaktgeber (13), einen elektrischen Energiespeicher (15) und einen Microcontroller (14) mit einer Kommunikationsschnittstelle aufweist, und der Microcontroller (14) dazu ausgebildet ist, bei Betätigung des Betätigungselements (12) und damit der Betätigung des Kontaktgebers (13), ein Datentelegramm über die Kommunikationsschnittstelle abzusenden, und
wobei die Daten-Kommunikationsverbindung (11) nur während einer Betätigung des Betätigungselements (12) und Übermittlung des Datentelegramms besteht.

2. Kommissioniersystem (1) nach Anspruch 1, **dadurch gekennzeichnet, dass** die Daten-Kommunikationsverbindung (11) durch eine paketbasierte Funk-Datenverbindung gebildet ist, insbesondere durch WLAN, und bevorzugt durch eine gepaarte Funk-Datenverbindung.

3. Kommissioniersystem (1) nach Anspruch 2, **dadurch gekennzeichnet, dass** in einem Speichermittel des Microcontrollers (14), Zugangsdaten (18) der Basisstation (9) hinterlegt sind, insbesondere eine Netzwerkkennung.

4. Kommissioniersystem (1) nach einem der Ansprüche 1 bis 3, **dadurch gekennzeichnet, dass** der Energiespeicher (15), der elektrische Kontaktgeber (13) und der Microcontroller (14) einen elektrischen Stromkreis bilden, insbesondere, dass durch einen betätigten Kontaktgeber (13), ein geschlossener Stromkreis ausgebildet ist.

5. Kommissioniersystem (1) nach Anspruch 1 bis 4, **dadurch gekennzeichnet, dass** der elektrische Kontaktgeber (13) mit einem Erfassungseingang (21) des Microcontrollers (14) verbunden ist.

6. Kommissioniersystem (1) nach Anspruch 1 bis 5, **dadurch gekennzeichnet, dass** der Microcontroller (14) einen Ruhezustand-Betriebsmodus aufweist, insbesondere einen Tief-Ruhezustand.

7. Kommissioniersystem (1) nach einem der Ansprüche 1 bis 6, **dadurch gekennzeichnet, dass** die Basisstation (9) einen weiteren Schaltausgang (22) aufweist, welcher gegebenenfalls über eine Schnittstelle (24) mit einem Datenverarbeitungssystem (23) verbunden.

8. Kommissioniersystem (1) nach Anspruch 7, **dadurch gekennzeichnet, dass** die Schnittstelle (24) durch einen Controller einer Mensch-Maschine-Schnittstelle gebildet ist.

9. Kommissioniersystem (1) nach einem der Ansprüche 1 bis 8, **dadurch gekennzeichnet, dass** die Empfangs- und Auswerteeinheit (16) dazu ausgebildet ist, eine Bestätigungsnachricht an die Mobileinheit (10) zu übermitteln, insbesondere über die Kommunikationsschnittstelle an den Microcontroller (14).

10. Kommissioniersystem (1) nach Anspruch 9, **dadurch gekennzeichnet, dass** die Mobileinheit (10) einen mit dem Microcontroller (14) verbundenen Signalgeber aufweist.

11. Kommissioniersystem (1) nach einem der Ansprüche 1 bis 8, **dadurch gekennzeichnet, dass** die Mobileinheit (10) ein Gehäuse (25) aufweist, welches durch einen Grundkörper (26) und das Betätigungselement (12) gebildet ist, wobei der Energiespeicher (15), der Kontaktgeber (13) und der Microcontroller (14) im Gehäuse (25) aufgenommen sind.

12. Kommissioniersystem (1) nach Anspruch 11, **dadurch gekennzeichnet, dass** der Grundkörper (26) ein Haftelement (27) zur lösbaren Anordnung der Mobileinheit (10) an einem Bauteil der Arbeitsstation aufweist.

13. Kommissioniersystem (1) nach Anspruch 11, **dadurch gekennzeichnet, dass** der Grundkörper (26) ein elastisches Bügelelement (28) aufweist, welches dazu ausgebildet ist, den Grundkörper (26) auf einem Kleidungsstück anzubringen, welches Kleidungsstück vom Bediener getragen wird.

14. Kommissioniersystem (1) nach einem der Ansprüche 1 bis 13, **dadurch gekennzeichnet, dass** die Mobileinheit (10) an einem Handschuh angeordnet ist, welcher Handschuh vom Bediener getragen wird.

15. Kommissioniersystem (1) nach Anspruch 14, **dadurch gekennzeichnet, dass** der Handschuh einen Handrückenabschnitt, einen Handflächenabschnitt und Fingerabschnitte aufweist und dass entweder das Betätigungselement (12) derart am Handflächenabschnitt angeordnet ist, dass es mit einem der Fingerabschnitte erreichbar und betätigbar ist, oder das Betätigungselement (12) derart an einem ersten Fingerabschnitt der Fingerabschnitte angeordnet ist, dass es mit einem zweiten Fingerabschnitt der Fingerabschnitte erreichbar und betätigbar ist.

16. Kommissioniersystem (1) nach einem der Ansprüche 1 bis 15, **dadurch gekennzeichnet, dass** das Betätigungselement (12) einhändig betätigbar ist.

17. Kommissioniersystem (1) nach einem der Ansprüche 1 bis 16, **dadurch gekennzeichnet, dass** die Basisstation (9) ein weiteres Betätigungselement mit einem elektrischen Kontaktgeber aufweist und/oder dass an der Arbeitsstation (4) ein solches weiteres Betätigungselement angeordnet ist, welcher Kontaktgeber mit der Empfangs- und Auswerteeinheit (16) verbunden ist.

## Claims

1. An order-picking system (1) with a storage system (2) and at least one workstation, at which a source load carrier (5) and a target load carrier (6) for an order may be provided, wherein the operator transfers at least one article unit from the source load carrier (5) into the target load carrier (6) according to an order, wherein the workstation
- is connected, in respect of an article flow, to the storage system (2) by means of a conveying system (3), and
- comprises a remote control device,
- comprises a process controller (8) and a confirmation control element (7) connected thereto, which process controller (8) is designed to trigger a step following the current order after actuation of the confirmation control element (7) by the operator,
wherein the confirmation control element (7) has a base station (9) and a mobile unit (10), between which a coupled, wireless data communication connection (11) is established,
wherein the base station (9) comprises a receiving and evaluation unit (16), which is always configured to receive data telegrams of the mobile unit (10) and comprises a switching output (17) that is connected to a control input (19) of the process controller (8),
wherein the mobile unit (10) has an actuating element (12) with an electric contactor (13), an electric energy storage (15), and a micro controller (14) with a communication interface, and the micro controller (14) is configured to send a data telegram by means of the communication interface upon actuation of the actuating element (12) and thus, the actuation of the contactor (13), and
wherein the data communication connection (11) is only established during an actuation of the actuating element (12) and the transmission of the data telegram.

2. The order-picking system (1) according to claim 1, **characterized in that** the data communication connection (11) is formed by a packet-based radio data connection, in particular by means of WLAN, and preferably by means of a paired radio data connection.

3. The order-picking system (1) according to claim 2, **characterized in that** access data (18) of the base station (9), in particular a network identifier, is stored in a storage means of the micro controller (14).

4. The order-picking system (1) according to one of claims 1 to 3, **characterized in that** the energy storage (15), the electric contactor (13), and the micro controller (14) form an electric circuit, in particular that a closed circuit is formed by an actuated contactor (13).

5. The order-picking system (1) according to claims 1 to 4, **characterized in that** the electric contactor (13) is connected to a detection input (21) of the micro controller (14).

6. The order-picking system (1) according to claims 1 to 5, **characterized in that** the micro controller (14) has a non-operating state operating mode, in particular a deep non-operating state.

7. The order-picking system (1) according to one of claims 1 to 6, **characterized in that** the base station (9) has a further switching output (22), which is possibly connected to a data processing system (23) via an interface (24).

8. The order-picking system (1) according to claim 7, **characterized in that** the interface (24) is formed by a controller of a human-machine interface.

9. The order-picking system (1) according to one of claims 1 to 8, **characterized in that** the receiving and evaluation unit (16) is configured to transmit a confirmation message to the mobile unit (10), in particular to the micro controller (14) via the communication interface.

10. The order-picking system (1) according to claim 9, **characterized in that** the mobile unit (10) comprises a signal generator connected to the micro controller (14).

11. The order-picking system (1) according to one of claims 1 to 8, **characterized in that** the mobile unit (10) has a housing (25), which is formed by a base body (26) and the actuating element (12), wherein the energy storage (15), the contactor (13), and the micro controller (14) are accommodated in the housing (25).

12. The order-picking system (1) according to claim 11, **characterized in that** the base body (26) has an adhesive element (27) for releasably arranging the mobile unit (10) on a component of the workstation.

13. The order-picking system (1) according to claim 11, **characterized in that** the base body (26) has an elastic clip element (28), which is designed to attach the base body (26) to a piece of clothing, which piece of clothing is worn by the operator.

14. The order-picking system (1) according to one of claims 1 to 13, **characterized in that** the mobile unit (10) is arranged on a glove, which glove is worn by the operator.

15. The order-picking system (1) according to claim 14, **characterized in that** the glove has a back-of-the-hand section, a palm section, and finger sections, and that either the actuation element (12) is arranged on the palm section such that it can be reached and actuated using one of the finger sections, or the actuation element (12) is arranged on a first finger section of the finger sections such that it can be reached and actuated using a second finger section of the finger sections.

16. The order-picking system (1) according to one of claims 1 to 15, **characterized in that** the actuating element (12) can be actuated with one hand.

17. The order-picking system (1) according to one of claims 1 to 16, **characterized in that** the base station (9) has a further actuating element with an electric contactor, and/or that such a further actuating element is arranged at the workstation (4), which contactor is connected to the receiving and evaluation unit (16).

## Revendications

1. Système de préparation de commandes (1) avec un système de stockage (2) et au moins une station de travail, au niveau de laquelle un support de charge source (5) et un support de charge cible (6) d'une commande peuvent être mis à disposition, dans lequel l'opérateur peut, selon une commande, effectuer un transfert d'au moins une unité d'article du support de charge source (5) vers le support de charge cible (6), dans lequel la station de travail
- est reliée, conformément à un flux d'articles, avec le système de stockage (2) par l'intermédiaire d'un système de convoyage (3),
- comprend un dispositif de commande à distance,
- comprend une commande de processus (8) et un élément de commande de confirmation (7) relié à celle-ci, cette commande de processus (8) étant conçue pour déclencher, après l'actionnement de l'élément de commande de confirmation (7) par l'opérateur, une étape suivant la commande actuelle,
dans lequel l'élément de commande de confirmation (7) comprend une station de base (9) et une unité mobile (10), entre lesquelles existe une liaison de communication de données sans fil (11),
dans lequel la station de base (9) comprend une unité de réception et d'analyse (16) qui est conçue pour la réception de télégrammes de données de l'unité mobile (10) et qui comprend une sortie de commutation (17) qui est reliée avec l'entrée de commande (19) de la commande de processus (8),
dans lequel l'unité mobile (10) comprend un élément d'actionnement (12) avec un contacteur électrique (13), un accumulateur d'énergie électrique (15) et un micro-contrôleur (14) avec une interface de communication et le micro-contrôleur (14) est conçu pour émettre, lors de l'actionnement de l'élément d'actionnement (12) et donc l'actionnement du contacteur (13), un télégramme de données par l'intermédiaire de l'interface de communication et
dans lequel la liaison de communication de données (11) n'existe que pendant un actionnement de l'élément d'actionnement (12) et la transmission du télégramme de données.

2. Système de préparation de commandes (1) selon la revendication 1, **caractérisé en ce que** la liaison de communication de données (11) est constituée d'une liaison de données radio par paquets, plus particulièrement d'un WLAN, et de préférence d'une liaison de données radio appariée.

3. Système de préparation de commandes (1) selon la revendication 2, **caractérisé en ce que**, dans un moyen d'accumulation du micro-contrôleur (14), sont enregistrées des données d'accès (18) de la station de base (9), plus particulièrement un identifiant réseau.

4. Système de préparation de commandes (1) selon l'une des revendications 1 à 3, **caractérisé en ce que** l'accumulateur d'énergie (15), le contacteur électrique (13) et me micro-contrôleur (14) forment un circuit électrique, plus particulièrement **en ce qu'**un circuit électrique fermé est réalisé à l'aide d'un contacteur actionné (13).

5. Système de préparation de commandes (1) selon la revendication 1 à 4, **caractérisé en ce que** le contacteur électrique (13) est relié avec une entrée de détection (21) du micro-contrôleur (14).

6. Système de préparation de commandes (1) selon la revendication 1 à 5, **caractérisé en ce que** le micro-contrôleur (14) présente un mode de fonctionnement à état de repos, plus particulièrement un état de repos profond.

7. Système de préparation de commandes (1) selon l'une des revendications 1 à 6, **caractérisé en ce que** la station de base (9) comprend une autre sortie de commutation (22) qui est reliée, le cas échéant, par l'intermédiaire d'une interface (24) avec un système de traitement de données (23).

8. Système de préparation de commandes (1) selon la revendication 7, **caractérisé en ce que** l'interface (24) est constituée d'un contrôleur d'une interface homme-machine.

9. Système de préparation de commandes (1) selon l'une des revendications 1 à 8, **caractérisé en ce que** l'unité de réception et d'analyse (16) est conçue pour transmettre un message de confirmation à l'unité mobile (10), plus particulièrement, par l'intermédiaire de l'interface de communication, au micro-contrôleur (14).

10. Système de préparation de commandes (1) selon la revendication 9, **caractérisé en ce que** l'unité mobile (10) comprend un générateur de signaux relié avec le micro-contrôleur (14).

11. Système de préparation de commandes (1) selon l'une des revendications 1 à 8, **caractérisé en ce que** l'unité mobile (10) comprend un boîtier (25) qui est constitué d'un corps de base (26) et de l'élément d'actionnement (12), dans lequel l'accumulateur d'énergie (15), le contacteur (13) et le micro-contrôleur (14) sont logés dans le boîtier (25).

12. Système de préparation de commandes (1) selon la revendication 11, **caractérisé en ce que** le corps de base (26) comprend un élément adhésif (27) pour la disposition amovible de l'unité mobile (10) sur un composant de la station de travail.

13. Système de préparation de commandes (1) selon la revendication 11, **caractérisé en ce que** le corps de base (26) comprend un élément de type étrier élastique (28) qui est conçu pour monter le corps de base (26) sur un vêtement, ce vêtement étant porté par l'opérateur.

14. Système de préparation de commandes (1) selon l'une des revendications 1 à 13, **caractérisé en ce que** l'unité mobile (10) est disposée sur un gant, ce gant étant porté par l'opérateur.

15. Système de préparation de commandes (1) selon la revendication 14, **caractérisé en ce que** le gant comprend une portion de dos de main, une portion de paume de main et des portions de doigts et **en ce que** soit un élément d'actionnement (12) est disposé sur la portion de paume de main de façon à ce qu'il puisse être atteint et actionné avec une des portions de doigts soit l'élément d'actionnement (12) est disposé sur une première portion de doigt des portions de doigts de façon à pouvoir être atteint et actionné avec une deuxième portion de doigt des portions de doigts.

16. Système de préparation de commandes (1) selon l'une des revendications 1 à 15, **caractérisé en ce que** l'élément d'actionnement (12) peut être actionné d'une seule main.

17. Système de préparation de commandes (1) selon l'une des revendications 1 à 16, **caractérisé en ce que** la station de base (9) comprend un autre élément d'actionnement avec un contacteur électrique et/ou **en ce que**, au niveau de la station de base (4), un tel élément d'actionnement supplémentaire est disposé, ce contacteur étant relié avec l'unité de réception et d'analyse (16).
